Europäisches Patentamt

European Patent Office

Office européen des brevets

(11) Veröffentlichungsnummer: **0 400 462**
A2

## (12) EUROPÄISCHE PATENTANMELDUNG

(21) Anmeldenummer: **90109737.8**

(22) Anmeldetag: **22.05.90**

(51) Int. Cl.⁵: **F16L 55/165**

(30) Priorität: **02.06.89 DE 3917989**

(43) Veröffentlichungstag der Anmeldung:
**05.12.90 Patentblatt 90/49**

(84) Benannte Vertragsstaaten:
**CH DE FR GB IT LI**

(71) Anmelder: **BAYER AG**

**D-5090 Leverkusen 1 Bayerwerk(DE)**

(72) Erfinder: **Gieger, Eckhard**
**Paul-Klee-Strasse 68g**
**D-5090 Leverkusen 1(DE)**

(54) **Vorrichtung zum Ausbessern oder zur Erneuerung von Behälterstutzen emaillierter Apparate.**

(57) Die Vorrichtung zum Ausbessern oder zur Erneuerung von Stutzen (1) an Behältern (2) besteht aus einem oberflächengeschützten Ersatzstutzen (3) mit einem Innenbund (4) und einem Außenbund (5), der durch den auszubessernden Stutzen (1) oder die dazugehörige Behälteröffnung (6) hindurchgeführt wird, so daß der Innenbund (4) ringförmig die innere Behälterwandfläche außerhalb der Behälteröffnung (6) überlappt und aus einem zwischen dem Innenbund (4) und der Behälterinnenwand angeordneten Dichtungsring (7). Durch eine Spannvorrichtung (8,9,10), die sich einerseits an der Behälteraußenwand oder an dem ursprünglichen Stutzen (1) und andererseits am Außenbund (5) des Ersatzstutzens (3) abstützt, wird der Ersatzstutzen (3) am Behälter (2) fixiert und mit dem Innenbund (4) gegen den Dichtungsring (7) und die Behälterinnenwand gepreßt.

EP 0 400 462 A2

FIG.1

In der Industrie werden häufig emaillierte Behälter bzw. Kessel eingesetzt. Durch Emaillierung geschützte Metalloberflächen weisen einen hervorragenden Korrosionsschutz gegen fast alle aggressiven Medien auf. Der Korrosionsschutz besteht jedoch nur solange, wie die Emailleschicht frei von Beschädigungen und Poren ist. Wegen ihrer Sprödigkeit ist die Emaillierung besonders empfindlich gegen mechanische Beanspruchungen und Schläge. Außerdem besteht die Gefahr, daß beim Emaillieren entstandene Poren, die zum Teil in verdeckter Form vorliegen, aufbrechen.

Aufgrund dieser besonderen Gefährdung wurden im Laufe der Zeit Verfahren entwickelt, um Poren und Beschädigungen der Emailleschicht zu reparieren. Bei der am häufigsten angewandten Reparaturmethode werden die beschädigten Stellen mit Stopfen, Flicken oder Manschetten aus Edelmetall, insbesondere Tantal, überdeckt. Von Nachteil ist dabei, daß das Edelmetall meist nur einen geringeren Korrosionsschutz bieten kann, als dies bei der Emaillierung der Fall ist. Außerdem sind die Dichtungen der Reparaturstelle von außen nicht kontrollierbar, so daß bei einer Unterwanderung der Dichtung ein Angriff auf den ungeschützten Grundwerkstoff des Apparates erst spät - oft zu spät für eine erneute Reparatur - festgestellt werden kann.

Vergleichbare Reparaturmöglichkeiten an Behälterstutzen sind bisher nicht bekannt, obwohl Schäden im Stutzenbereich und besonders am Bodenauslaufstutzen von Rührwerksbehältern relativ häufig auftreten. Die Ursache für solche Schäden liegt darin, daß hier der wegen seiner engen Radien besonders empfindliche Stutzenbereich mit dem Bereich der größten mechanischen Beanspruchung (Abrasion, Fremdkörper, Montagefehler) zusammenfällt.

Der Erfindung liegt die Aufgabe zugrunde, eine Vorrichtung zum Ausbessern oder zur Erneuerung von Stutzen an oberflächengeschützten Behältern zu entwickeln, die gleichzeitig folgende Anforderungen erfüllt:
- Die bisher vorhandenen Stutzen sollten weiterhin genutzt werden können.
- Der Ersatzstutzen muß einschließlich der Reparaturstelle einen vollwertigen Oberflächenschutz bieten.
- Die Dichtheit der Reparaturstelle sollte von außen her kontrolliert werden können.

Bisher blieb als einziger Ausweg nur die kostenintensive Anbringung eines neuen Stutzens in Verbindung mit einer Reemaillierung des gesamten Behälters, wenn nicht auf eine der oben erwähnten Anforderungen verzichtet werden konnte.

Erfindungsgemäß wird diese Aufgabe durch eine Vorrichtung mit folgenden Merkmalen gelöst:
a) Ein oberflächengeschützter Ersatzstutzen mit einem Innenbund und einem Außenbund wird durch den auszubessernden Stutzen oder die dazugehörige Behälteröffnung hindurchgeführt, so daß der Innenbund ringförmig die innere Behälterwandfläche außerhalb der Behälteröffnung überlappt.

b) Zwischen dem Innenbund und der Behälterinnenwand ist ein Dichtungsring angeordnet.

c) Durch eine Spannvorrichtung, die sich einerseits an der Behälteraußenwand oder an dem ursprünglichen (schadhaften) Stutzen und andererseits am Außenbund des Ersatzstutzens abstützt, wird der Ersatzstutzen am Behälter fixiert und mit dem Innenbund gegen den Dichtungsring und die Behälterinnenwand gepreßt.

Die Erfindung beruht also darauf, daß ein emaillierter oder PTFE-verkleideter Spezialstutzen (Ersatzstutzen) von innen in den defekten Behälterstutzen oder durch die an dieser Stelle vorhandene Öffnung gesteckt wird und die zwischen dem Spezialstutzen und dem Behälter eingelegte Dichtung mit der Spannvorrichtung angepreßt wird.

Mit der Erfindung werden folgende Vorteile erzielt:
- Ein auf diese Weise reparierter Stutzen kann wieder uneingeschränkt benutzt werden.
- Bei Reparaturen bzw. Ersatz des Auslaufstutzens an einem Behälter können vorgefertigte modifizierte Auslaufventile eingesetzt werden.
- Die Reparaturstelle kann von außen her auf Dichtheit überprüft werden.
- Es ist weiterhin eine Emailleprüfung mit Hochspannung und Sonde möglich.
- Es können auf diese Weise auch Reparaturen an Druckbehältern durchgeführt werden.
- Die zur Reparatur benötigten Einzelteile können in Form eines Bausatzes (Sets) bereitgehalten werden und somit reparaturbedingte Ausfallzeiten minimiert werden. Außerdem ist zur Durchführung solcher Reparaturen kein besonders geschultes Fachpersonal erforderlich. Der Behälter steht nach der Reparatur sofort wieder uneingeschränkt zur Verfügung.
- Schließlich ist die erfindungsgemäße Vorrichtung auch dazu geeignet, um nachträglich in oberflächengeschützten Behältern Stutzen einzubringen.

Im folgenden soll die Erfindung anhand von Ausführungsbeispielen und Zeichnungen näher erläutert werden. Es zeigen:

Fig. 1 den Einsatz eines Spezialstutzens für Reparaturzwecke in einen defekten Behälterstutzen (Schnittbild) und

Fig. 2 die Anbringung des Spezialstutzens an einer Behälteröffnung (ebenfalls im Schnitt).

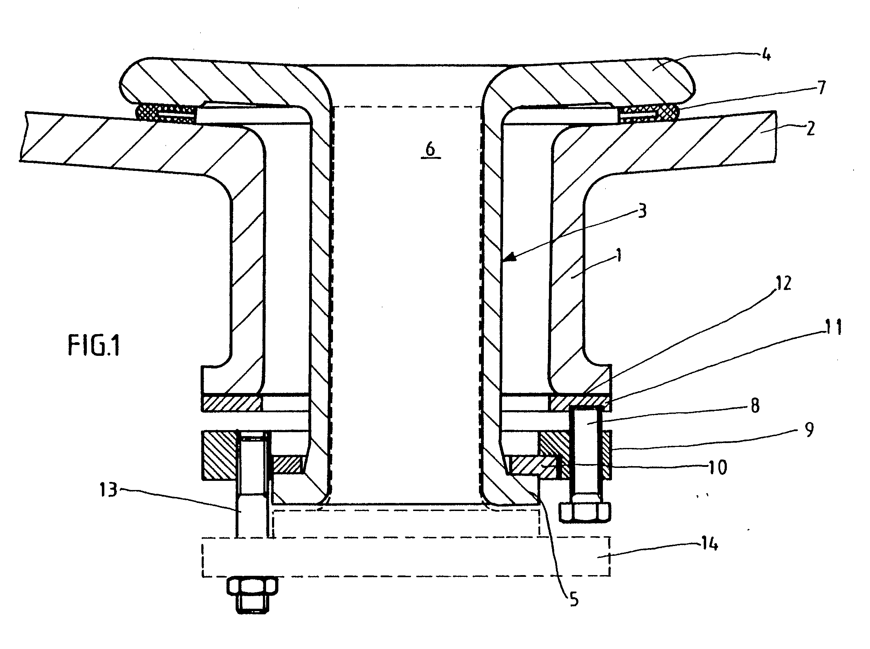

Gemäß Fig. 1 wird in einen beschädigten Stutzen 1 eines Behälters 2 ein vorgefertigter oberflächengeschützter (z.B. emaillierter oder PTFE-verkleideter) Reparaturstutzen 3 (Spezialstutzen) mit einem Innenbund 4 und einem Außenbund 5 gesteckt. Der Innenbund 4 überlappt dabei mit einem Teil der Bundfläche ringförmig einen Teil der Behälterinnenwand in der Nähe des Außenumfanges der Behälteröffnung 6. Zwischen dieser Bundfläche und der Behälterinnenwand ist ein Dichtungsring 7 angeordnet. Die Dichtung 7 wird mit Hilfe von Schrauben 8 über einen Losflansch 9 (axial verschiebbarer Flansch), der sich einerseits über einen geteilten Ring 10 am Außenbund 5 des Ersatzstutzens 3 und andererseits am Stutzen 1 des Behälters 2 abstützt, gespannt. Die aus den Teilen 8, 9 und 10 bestehende Spannvorrichtung dient also gleichzeitig zur Montage, Zentrierung und Abdichtung (über den Dichtungsring 7) des Reparaturstutzens 3. Ein besonderer Vorteil ist dabei, daß die Schrauben 8 außerhalb des Behälters 2 angeordnet und leicht zugänglich sind.

Zwischen den Schrauben 8 und dem Behälterstutzen 1 kann eine Druckscheibe 11 und eine dünne weiche Unterlage 12 zum Schutz des Behälterstutzens 1 eingefügt werden.

Am Ende des Reparatur- bzw. Spezialstutzens 3 können nun mittels Stiftschrauben 13, die im Losflansch 9 eingeschraubt sind, übliche Stutzenaufbauten wie z.B. ein modifiziertes Auslaufventil 14 befestigt werden.

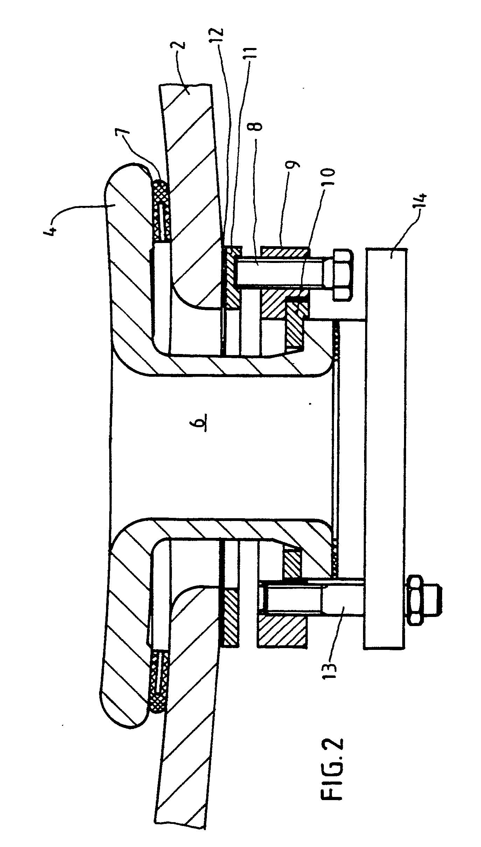

Die Ausführung nach Fig. 2 ist ähnlich aufgebaut wie die nach Fig. 1. Im Unterschied zu Fig. 1 stützt sich jedoch die Spannvorrichtung 8, 9, 10 nicht auf dem Behälterstutzen ab, sondern direkt auf der Außenwand des Behälters 2. Zu diesem Zweck wurde der ursprünglich vorhandene defekte Stutzen 1 abgetrennt.

Die Ausführung nach Fig. 2 kann auch mit Erfolg verwendet werden, wenn zusätzliche Stutzen an emaillierten Apparaten angebracht werden sollen.

Aufgrund der einfachen Montage (keine Schleif- und Schweißarbeiten!) können solche Spezialstutzen auch schon prophylaktisch zur Erhöhung der Betriebssicherheit in Originalbehälterstutzen an besonders gefährdeten Stellen eingebaut werden.

**Ansprüche**

Vorrichtung zum Ausbessern oder zur Erneuerung von Stutzen (1) an Behältern (2), gekennzeichnet

a) durch einen oberflächengeschützten Ersatzstutzen (3) mit einem Innenbund (4) und einem Außenbund (5), der durch den auszubessernden Stutzen (1) oder die dazugehörige Behälteröffnung (6) hindurchgeführt wird, so daß der Innenbund (4) ringförmig die innere Behälterwandfläche außerhalb der Behälteröffnung (6) überlappt,

b) durch einen zwischen dem Innenbund (4) und der Behälterinnenwand angeordneten Dichtungsring (7) und

c) durch eine Spannvorrichtung (8, 9, 10), die sich einerseits an der Behälteraußenwand oder an dem ursprünglichen (schadhaften) Stutzen (1) und andererseits am Außenbund (5) des Ersatzstutzens (3) abstützt und den Ersatzstutzen (3) am Behälter (2) fixiert und mit dem Innenbund (4) gegen den Dichtungsring (7) und die Behälterinnenwand preßt.

FIG.1

EP 0 400 462 A2

LeA 26931

FIG.2

EP 0 400 462 A2